# EUROPEAN PATENT SPECIFICATION

(11) **EP 3 686 083 B1**
(45) Date of publication and mention of the grant of the patent: **10.04.2024**
(21) Application number: 19460059.9
(22) Date of filing: 20.11.2019
(51) Int. Cl.: B62B 9/08

(54) **BRAKE TAPPET**
BREMSSTÖSSEL
POUSSOIR DE FREIN

(30) Priority: 29.11.2018 PL 12784518 U
(43) Date of publication of application: 29.07.2020
(73) Proprietor: Przedsiebiorstwo Produkcyjno - Handlowe "ARO" KARON Spolka Jawna, 42-200 Czestochowa (PL)
(72) Inventor: Karon, Janusz, 42-200 Czestochowa (PL)
(74) Representative: Korbela, Anna

(56) References cited:
- EP-A1- 0 633 178
- EP-A1- 0 858 940
- GB-A- 2 434 419
- US-A- 5 460 399

## Description

The subject matter of the invention is a brake, which is a part of the locking mechanism in a vehicle's braking system and is used in various types of vehicles, primarily in prams.

Braking of wheels in a simple vehicle is usually achieved by pressing a brake. It is similarly in the developed solution. The type of a braking system which is described here, usually involves the use of a 'brake tappet', i.e., a device which transmits an impulse, user's signal to the brake to stop the vehicle. One end of the tappet is in contact with the brake pedal. After pressing the brake lever, the tappet is moved, the brake is pushed and the wheel is blocked by the brake (directly or indirectly, e.g., with a spring or other element).

The brake tappet is always vulnerable to damage as its channels often get dirty. The dirt which gets into channels (e.g., sand and dust) and which covers their coating with peels causes the deformation and damage to the tappet as subsequent pressings of the brake cause the tappet to bend, warp and it gets damaged due to the fatigue of the material it is made of.

The currently known solutions do not eliminate the described problem.

From the description of the Polish invention application number P.304082 (filed with priority on 1993-07-10 GB 9314316) there is a solution known as 'Brake for a push-chair or the like'. This solution describes a brake which on one axis of a push-chair or the like comprises a series of radially oriented ribs on one side of each of the wheels and a corresponding brake member that moves reciprocally and parallelly to the axis, inside and outside the ribs of the respective wheel. Each of the brake members has a cam follower on its inboard end engaging with a cam member which rotates on a horizontal axis, perpendicularly to the said axis. The leg-operated lever is coupled to the cam member in such a way that pressing on one end thereof causes the cam member to rotate in one direction and pressing on the other end causes the cam member to rotate in the other direction.

From another description of the Polish utility model application number W.109296, there is a solution known as 'Shock absorbing and locking mechanism for perambulators. The subject matter of this utility model is a blocking and shock absorbing mechanism for perambulators, which can be used in both perambulators and baby carriages. The blocking and shock absorbing mechanism is characterized in that on the common axis, which is the pin connecting the structural tube with the clamping ring, there is an articulately placed shock absorber housing and the locking lever with a spring-loaded shock absorber placed inside the housing. The cover has an elliptical cut-out in which the connecting rivet and the stopping element ending with the tip, move. The spring is pushed to the tip. On the other side, the cover is finished with a sleeve transferring the pressure to the spring on the side of the tube. Whereas the locking lever which is equipped with catches is located near the wheel with the rack and radially spaced projections in which, after lowering the locking lever, the catches blocking the pram's wheel get inserted.

From another description of the Polish utility model application number W.111410, there is a solution known, 'Perambulator wheel brake'. The subject matter of the utility model is the perambulator wheel brake used both in baby perambulators and strollers for older children, as well as perambulators combining both functions. The brake consists of the base of the pedal brake lever articulated with it, interoperating with the pad mounted on the base and the locking toothed wheel, where the locking toothed wheel is attached to the wheel of the perambulator and they are together on a common axis. The base is mounted on one side by means of a cut-out made in it on the wheel axle of the perambulator, and on the other side, attached to the chassis tube by means of a cut-out. In addition, the upper part of the base has the articulated rivet brake pedal arms attached to its two side walls and on one of these arms on the side of the toothed wheel there is a wedging bolt having a shape that allows it to slide between the teeth of the locking wheel when the perambulator brakes.

In turn, from the description of the Polish invention patent number PL 229297, there is a solution known as 'Brake, preferably for a cart for transport of persons, preferably for a rehabilitation cart'. The brake, especially for a cart for transport of persons, preferably for a rehabilitation cart, containing a plastic ring interoperating with the locking pin, which is placed on the hub and equipped with circumferentially arranged holes, is characterized in that the plastic ring is connected to the connectors made of metal with an reinforcement ring, and the slidingly fixed and permanently connected to the lever pin interoperates with the holes of the plastic ring and reinforcement ring.

However, from the description of the Polish invention application number P.412282, there is a solution known as 'Braking assembly for a baby-cart rear wheels. The braking assembly for a baby-cart rear wheels has a brake pedal with a shaped, two-part housing, with a cylindrical chamber, in the wall of which there is a blocking socket, located transversely to its axis, and the cam element which form side tappets of oblique working walls, embedded under the longitudinal hole of the guide in the brake pedal housing attached to the rear tube of the wheels' mounting unit, where the side tappets interoperate with a wedge-like spreading and locking tab located perpendicularly to the axis of the spreader rods, whose other end interoperates with the brake pedal's blocking socket.

Another solution is known from the American patent US5460399A entitled "Baby stroller with park brake". The pair of brake rods used therein is movably supported by the rear axle of the stroller for lateral movement of each toward and away from one of the receivers under the urging of a coil spring. A foot pedal actuator is rotatable between brake engaged and disengaged positions. The foot pedal carries a cam which moves the brake rods toward and into one of the receiver openings of the corresponding receiver when the brake pedal is rotated to engaged position to lock the rear wheels against rotational movement. The cam permits withdrawal of the brake rods from the receiver openings when the foot pedal is rotated to the disengaged position. The foot pedal is provided with stops to limit rotation of the foot pedal beyond the engaged and disengaged positions.

In turn, from the British patent description GB2434419A, a solution entitled "Braking device having braking rods actuated by co-operating spiral grooves". It shows A braking device for a child seat. The braking device comprises a pair of first and second braking rods, a pair of first and second braking pins and a braking pedal mechanism, the braking device being provided in a connecting tube between two rear wheels. The braking pins are mounted in spiral grooves. When the brake pedal mechanism rotates with respect to the connecting tube in a direction, the braking rods move outward such that the outer ends of the braking rods are engaged with the rear wheels respectively, thereby completing the locking of the rear wheels, and when the brake pedal mechanism rotates with respect to the connecting tube in another direction, the braking rods move inward such that the outer ends of the braking rods are disengaged from the rear wheels respectively, thereby completing the releasing of the rear wheels.

However, from the description of the European invention application number EP0858940A1, there is a solution known as "Braking device particularly for baby carriages, strollers and the like". Braking device comprises at least one locking element which is associated with a frame of a baby carriage, stroller and the like and can move axially with respect to the rotation axis of a wheel of the frame in order to detachably engage a contoured body which is rigidly associated with the hub of said wheel, said locking element having at least one portion interfering with said contoured body in order to prevent its rotation.

Whereas, from the description of the Polish invention application number P.415724, there is a solution known as the 'Truck brake mechanism'. The developed truck brake mechanism consists of two interconnected mechanism elements that interoperate with two different truck wheels. These elements are brakes. They are usually installed respectively at each of the two rear wheels of the truck and they are connected to each other by means of a cable. One of them - preferably the right one - is a brake with a lever, Pressing the lever with the foot causes a partial rotation of the rack in each of the two parts of the mechanism, e.g., by an angle of 60 ° - and then the position of the rack releasing or clamping the truck brake mechanism is changed. Changing the position of the rack causes displacement of the pin, which, when pushed, slides inside the brake mechanism and pushes the pin out of the cover. The ejected in this way pin hits the wheel and brakes it. When the lever is pressed again, the rack rotates again around its axis by a 90° leap, and the bolt ejects being supported by a spring mechanism and pushes the pin to a rest position. In this position, the pin hides in the cover and does not block the wheel of the truck. This is also possible owing to the rack structure, which has two hollows on its internal disc, which are arranged in polar directions, i.e., they are made on opposite sides of the depressor disc, in which the pin sinks in the position when the truck brake mechanism is released.

The purpose of the developed brake tappet for a vehicle, in particular a pram is to improve the efficiency of the vehicle's braking system, and at the same time increase its resistance to damage, including those resulting from mechanical wear, and consequently extend the life of the braking system, increasing its reliability and security of its operation.

According to the invention this problem is solved by a pram brake mechanism as defined in claim 1. Preferred embodiments are defined in the dependent claims.

Sometimes the rivet is embedded in the housing.

The rivet is usually made of metal.

Changing the structure of the brake tappet and introducing elements reinforcing this structure, as well as the appropriate selection of materials from which it is made increases its resistance to mechanical damage and minimizes the effect of wear during its operation.

In the developed solution, when the brake tappet, or more precisely its end, slides over the element triggering the movement of the tappet and actuating the brake blocking (or releasing it), i.e., when the pressure is applied to the element triggering the movement of the tappet - despite the fact that the friction occurs between the elements interacting with each other there is no damage of the tappet even if it is dirty. The resistance created by the pushed housing, as well as its main part and fitting is not too high and there is currently no deformation of the brake tappet.

Both the rivet head and the entire rivet remain unchanged and are not deformed.

The developed solution significantly extends the service life of the braking system, increases the reliability of the system and prevents any unpleasant incidents that in known mechanisms were the result of damage to the vehicle's braking system.

The solution according to the described utility model limits the possibility of damage to the braking system, which sometimes resulted in the vehicle wheels being unable to lock. As a result, both the safety of the use of a perambulator and the comfort of the user of the vehicle in which the developed solution is used increase.

The described utility model is further illustrated in the drawings, in which:

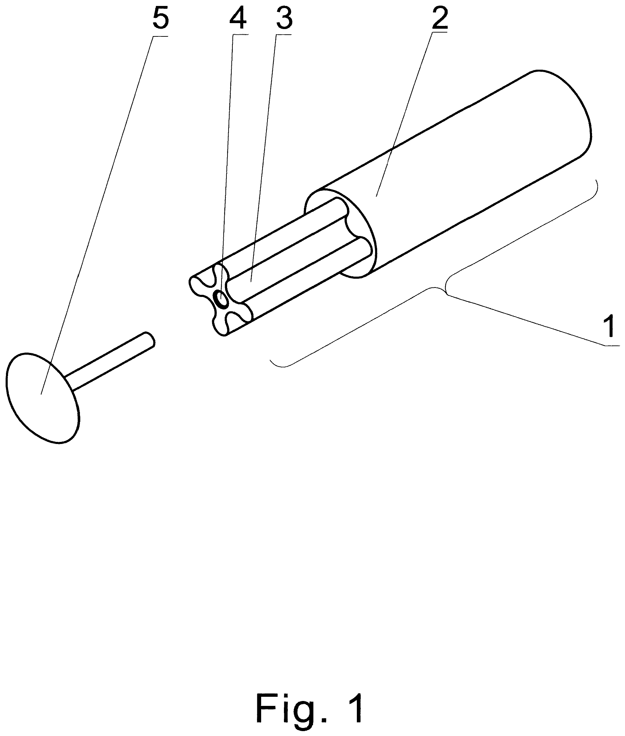

fig. 1 - shows an axonometric view of the brake tappet whose elements have been moved apart,

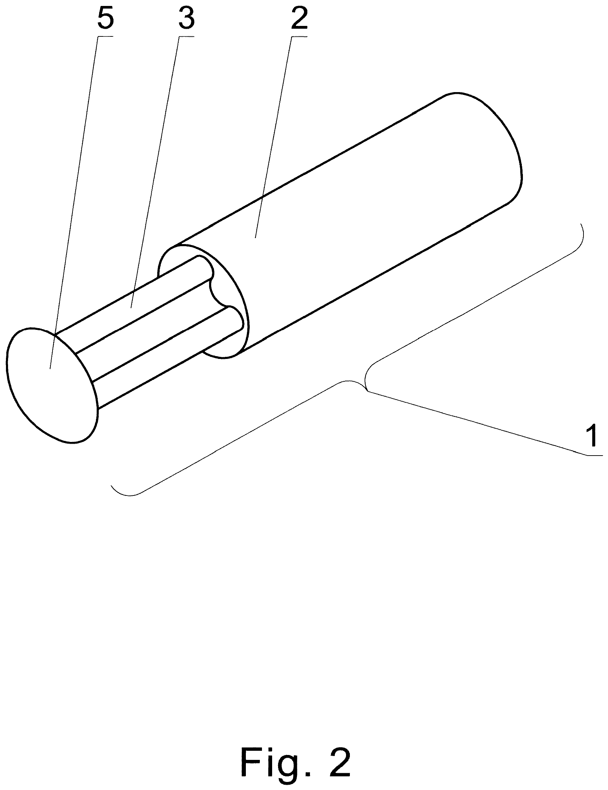

fig. 2 - shows an axonometric view of the assembled brake tappet,
fig. 3 - shows a side view of the brake tappet together with the elements making up the vehicle wheel locking mechanism, whereas
fig. 4 - shows a diagram of the operation of two two-wheel brake tappets in one axis of a vehicle.

The developed brake tappet consists essentially of housing 1, which is a monolithic element, in which two parts can be distinguished: usually a cylindrical part 2 and fitting 3.

The cross-section of part 2 is preferably round.

Whereas the cross-section of fitting 3 is preferably similar to the layout of the Greek cross, i.e. generally, two stripes intersecting at right angles, thus it is similar to the shape of the plus sign '+'. This element always has a shape increasing the resistance of the tappet to irreversible deformations arising as a result of the mechanical stress operating on the tappet, exceeding the range in which the material from which it is made is capable of resilient or elastic deformations.

Fitting 3 has an axial, internal, longitudinal hole 4, which is hollow therein. Longitudinal hole 4 is adapted to the shape of rivet 5, and thus, inserted into the longitudinal hole 4, rivet 5 locks in it and it does not fall out, and as a consequence rivet 5 does not have to be and is usually not permanently attached to housing 1. However, rivet 5 can also be embedded in housing 1.

In the rivet 5 which is used, the size of the projection in rivet 5, i.e., 'head' or 'end' is also planned and appropriately shaped.

The head of rivet 5 is an element that adheres to the lateral part of the brake, i.e., it adheres to a suitably profiled corrugated element 6, which triggers the movement of the tappet and transfers this movement to the wheel-locking brake.

Due to the fact that the head of rivet 5 adheres to the suitably profiled corrugated element 6, this prevents rivet 5 from slipping out of the longitudinal hole 4 if rivet 5 has only been inserted into longitudinal hole 4.

Housing 1 and its individual components are usually made of plastic using the injection moulding technology, which involves injecting plasticized plastic into a mould in which it solidifies into a so-called moulded piece.

Thus, the brake tappet - or more precisely its element which is placed furthest from the wheel, i.e., rivet 5 located in the longitudinal hole 4 constituting the peripheral element of the tappet - is located near corrugated element 6 and is shaped to fit it as rivet 5 interoperates with corrugated element 6.

When a vehicle user presses the brake, then the corrugated element 6:
- moves vertically to a different height or
- moves in an oscillating manner or
- moves horizontally
and rivet 5 stops remaining in the hollow of corrugated element 6. As the brake is pressed, the brake tappet is gradually pushed out by the increasingly convex parts of corrugated element 6 until it is completely displaced by the most protruding part of corrugated element 6, i.e., by bulge 7 which pushes housing 1 of the tappet (and hence the elements connected to the tappet) towards the wheel and blocks the wheel.

Thus, when the brake pedal is depressed, corrugated element 6 moves and bulge 7 pushes rivet 5, thereby pushing housing 1 towards the wheel of the vehicle. Pressing the brake pedal, causing corrugated element 6 to move consequently locks the vehicle wheel.

Preferably, corrugated element 6 is made of a material other than rivet 5, e.g. plastic or carbon fibre reinforced composite.

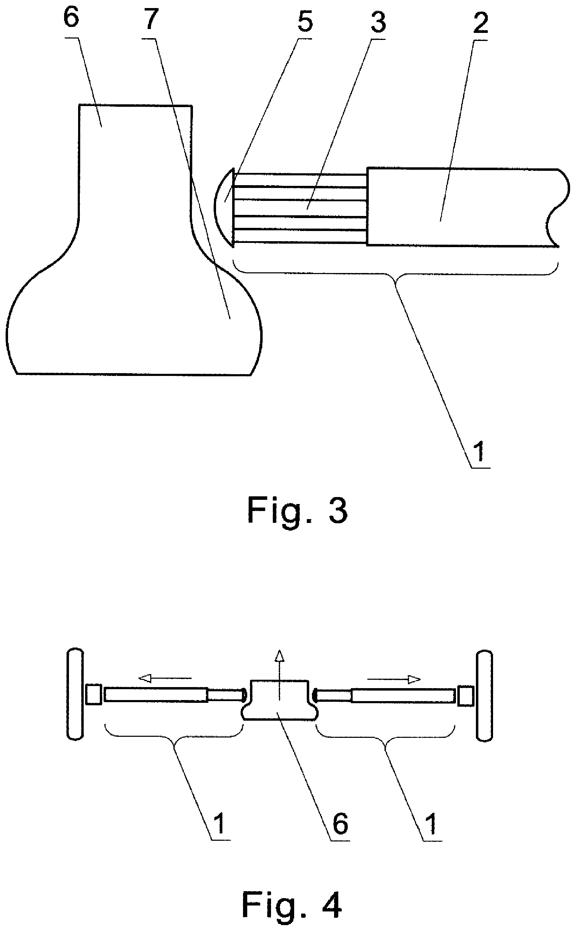

Corrugated element 6 is most preferably located at the midpoint of the rear axle of the vehicle, and two brake tappets are placed on both sides simultaneously, and they are arranged symmetrically, on the right and left of corrugated element 6. Then the vehicle user by pressing on one corrugated element 6 effectively blocks the two wheels of the vehicle (figure 4).

The described interoperation of the brake tappet (or tappets) with the braking system consists in forcing the movement of the brake tappet (or tappets) along the axis of the vehicle by means of corrugated element 6.

The design of the tappet reinforced by a specially shaped, most preferably metal rivet 5 owing to its metal, rounded head - prevents wear of the brake tappet.

Whereas the longitudinal part of rivet 5 placed in longitudinal hole 4 of fitting 3, reinforcing this element - prevents its deformation.

The life of the brake tappet is prolonged due to the direct contact of the plastic, from which corrugated element 6 is usually made with metal, from which rivet 5 is usually made of and also because of the contact of metal rivet 5 with housing 1 which is made of plastic.

The use of various materials in the solution according to this utility model improves the operation of the tappet and minimizes the possibility of bending of elements made of plastics, i.e., housing 1, its part 2 and fitting 3.

### List of elements:

1. housing,
2. part (usually cylindrical),
3. fitting,
4. longitudinal hole (internal),
5. rivet,
6. corrugated element,
7. bulge.

## Claims

1. **A pram brake mechanism** comprising a corrugated element (6) with a bulge (7) and two brake tappets (1-5) arranged symmetrically on both sides of the corrugated element (6), such that upon pressure on the corrugated element (6) by the user the corrugated element (6) moves and gradually pushes both brake tappets (1-5) outwardly and away from each other due to a first end of each brake tappet (1-5) sliding on the increasingly convex outer surface of the corrugated element (6), wherein a second end of each brake tappet (1-5) is adapted to engage a wheel for blocking the wheel, **characterized in that** each brake tappet (1-5) comprises a monolithic plastic housing (1) comprising a cylindrical part (2) and a fitting (3), each fitting (3) has an axial, internal, longitudinal hole (4) in which a rivet (5) corresponding to the shape of the hole is inserted, each rivet (5) is situated on the first end of the brake tappets (1-5) and is adapted to slide on the outer surface of the corrugated element (6) during movement of the corrugated element (6).

2. The pram brake mechanism with the_brake tappet according to claim 1, **characterized in that** the rivet (5) is embedded in the housing (1).

3. The pram brake mechanism with the brake tappet according to claim 1 or 2, **characterized in that** the rivet (5) is made of metal.

## Patentansprüche

1. Der Bremsmechanismus des Kinderwagens besteht aus einem gewölbten Element (6) mit Ausbuchtung (7) und zwei Bremsstößeln (1-5), die symmetrisch auf beiden Seiten des gewölbten Elements (6) angeordnet sind, so dass nach dem Betätigen des gewölbten Elements (6) von dem Benutzer, bewegt das gewölbte Element (6) sich und allmählich die beiden Bremsstößel (1-5) nach außen schiebt, indem das erste Ende jedes Bremsstößels (1-5) über die zunehmend konvexer Außenfläche des gewölbten Elements (6) gleitet, wobei das zweite Ende jedes Bremsstößels (1-5) für die Befestigung an einem Rad geeignet ist, nämlich um das Rad zu blockieren,
**dadurch gekennzeichnet, dass** jeder Bremsstößel (1-5) ein monolithisches Gehäuse (1) aus Kunststoff besitzt, das einen zylindrischen Teil (2) und ein Formstück (3) beinhaltet, und jedes Formstück (3) eine axiale, innere, Längsöffnung *(*4) aufweist, in die ein an die Öffnungsform angepasster Niet (5) eingeführt wird, und jeder Niet (5) am ersten Ende der Bremsstößel (1-5) angeordnet ist und während der Bewegung des gewölbten Elements (6) auf der Außenfläche des gewölbten Elements (6) ist angepasst an das Gleiten.

2. Der Bremsmechanismus des Kinderwagens mit dem Bremsstößel nach dem Anspruch 1, **dadurch gekennzeichnet, dass** der Niet (5) in das Gehäuse (1) versenkt ist.

3. Der Bremsmechanismus des Kinderwagens mit dem Bremsstößel nach dem Anspruch 1, **dadurch gekennzeichnet, dass** der Niet (5) aus Metall hergestellt wird.

## Revendications

1. Un mécanisme de freinage de poussette comprenant un élément bombé (6) avec un renflement (7) et deux poussoirs de frein (1-5) disposés symétriquement de part et d'autre de l'élément bombé (6), de telle sorte que lorsque l'utilisateur appuie sur l'élément bombé (6), l'élément bombé (6) se déplace et pousse progressivement les deux poussoirs de frein (1-5) extérieurement en les éloignant l'un de l'autre, la première extrémité de chaque poussoir de frein (1-5) glissant sur la surface extérieure de plus en plus convexe de l'élément bombé (6), où la seconde extrémité de chaque poussoir de frein (1-5) est adaptée pour s'engager dans la roue afin de bloquer la roue,
**caractérisé en ce que** chaque poussoir de frein (1-5) comprend un corps compact (1) en matière plastique comprenant une pièce cylindrique (2) et une pièce moulée (3), dans chaque pièce moulée (3) se trouve un alésage (4) longitudinal intérieur axial dans lequel est inséré un rivet (5) qui correspond à la forme de l'alésage, chaque rivet (5) étant situé à la première extrémité des poussoirs de frein (1-5) et étant adapté pour glisser le long de la surface extérieure de l'élément bombé (6) lorsque l'élément bombé (6) est en mouvement.

2. Un mécanisme de freinage de poussette comprenant le poussoir de frein, conformément à la revendication 1, **caractérisé en ce que** le rivet (5) est encastré dans le corps compact (1).

3. Un mécanisme de frein de poussette comprenant le poussoir de frein, conformément à la revendication 1, **caractérisé en ce que** le rivet (5) est fabriqué en métal.
